# EUROPÄISCHE PATENTSCHRIFT

(11) **EP 1 502 727 B1**
(45) Veröffentlichungstag und Bekanntmachung des Hinweises auf die Patenterteilung: **16.08.2006**
(21) Anmeldenummer: 04017490.6
(22) Anmeldetag: 23.07.2004
(51) Int. Cl.: B29C 70/02, B29C 70/48

(54) **Verbundformteil und Verfahren zu seiner Herstellung**
Composite article and method of its manufacture
Pièce moulée composite et son procédé de fabrication

(30) Priorität: 29.07.2003 DE 10334856
(43) Veröffentlichungstag der Anmeldung: 02.02.2005
(73) Patentinhaber: Deutsches Zentrum für Luft- und Raumfahrt e.V., 51147 Köln (DE)
(72) Erfinder: Riedel, Ulrich, Dr.-Ing., 38104 Braunschweig (DE); Röstermundt, Dirk, Dipl.-Ing., 31224 Peine (DE); Mosch, Jürgen, Dipl.-Ing., 38518 Gifhorn (DE)
(74) Vertreter: Lins, Edgar

(56) Entgegenhaltungen:
- FR-A- 2 791 920

## Beschreibung

Die Erfindung betrifft ein Verfahren zur Herstellung eines Verbundformteils durch Injektion eines flüssigen, niedrigviskosen Kunststoffs in einen Faserträger, der in eine Kavität einer evakuierbaren Form eingelegt ist, und durch anschließendes Erhärten des injizierten Kunststoffs in der Form.

Die Erfindung betrifft ferner ein Verbundformteil mit einem Faserträger und einer Kunststoffmatrix, die in den Faserträger in flüssiger Form injiziert worden ist.

Faserverbundformteile werden überwiegend in der Luft- und Raumfahrt sowie im Automobilbereich und in der Verkehrstechnik verwendet. Aufgrund ihrer Leichtbauweise und ihrer hervorragenden mechanischen Eigenschaften sind sie vielen anderen Konstruktionswerkstoffen überlegen. Sie bieten ferner den Vorteil, dass der Werkstoff maßgeschneidert geformt werden kann. Bekannt sind leistungsfähige Verbunde aus überwiegend duroplastischen Matrixsystemen mit geringen Dichten, insbesondere aus ungesättigten Polyester-, Epoxid-, Polyurethan- und Phenolharzen. Als verstärkende Faserstruktur werden häufig hochfeste und steife Fasern aus Glas, Kohlenstoff oder Aramid verwendet.

Derartige Verbundformteile können nach der Prepreg-Methode hergestellt werden. Hierbei werden Lagen des Faserträgers, beispielsweise Glasfasermatten, mit dem die Kunststoffmatrix bildenden Kunststoff getränkt, wobei der Kunststoff noch nicht aushärtet. Die benötigten Lagen der getränkten Faserträger werden in der Form aufeinander gestapelt und durch Schließen der Form in die gewünschte Formgebung gebracht. Durch Erhitzen der Form wird der Kunststoff verflüssigt und in der Form ausgehärtet, um das wunschgemäß geformte Verbundteil zu bilden.

In einer alternativen Herstellungsmethode werden die noch nicht mit Kunststoff versehenen Faserträgerlagen trocken in die Kavität des geeigneten Kunststoffs in flüssiger, niedrigviskoser Form injiziert. Dieses Verfahren wird RTM-Verfahren (Resin Transfer Moulding) genannt. Um das Entstehen von Luft- oder Gasblasen in der Kavität zu vermeiden, kann die Kavität evakuiert werden. In einer Modifikation des Verfahrens, die beispielsweise in der DE 198 53 709 C1 beschrieben ist, wird für das Anlegen des Vakuums und das Injizieren des flüssigen Kunststoffs nur eine Leitung benötigt. Dieses Verfahren wird als Differential-Pressure-RTM-Injektionsverfahren (DP-RTM) bezeichnet.

Es ist bekannt, die technologischen Eigenschaften der Faserverbundformteile durch anorganische Mikrofüllstoffe, beispielsweise aus Kreide, calcinierten Kaolinen, Quarzen, Metallpulver usw., in thermischer oder mechanischer Hinsicht zu verbessern. Derartige Mikrofüllstoffe werden üblicherweise mit mehr als 50 Gew.% in der Polymermatrix verwendet. Der Zusatz der Mikrofüllstoffe erhöht allerdings die Viskosität des flüssigen Kunststoffes und die Dichte des hergestellten Verbundformteils. Letzteres ist für eine angestrebte Leichtbauweise nachteilig. Ein Injektionsverfahren wobei solche Füllstoffe eingesetzt werden geht aus der FR-A-2791920 und gemäß dem Oberbegriff der Ansprüche 1 und 7 hervor.

Die Verwendung von Mikrofüllstoffen ist für die Herstellung von Faserverbundformteilen, insbesondere durch Injektionsverfahren, problematisch. Zum einen behindert die Viskositätserhöhung die Durchführung des Injektionsverfahrens und zum anderen übt der Faserträger eine Filterwirkung aus, die zu einer ungleichmäßigen Verteilung der Mikrofüllstoffe über das Volumen der Kunststoffmatrix führt. Demgemäß sind Mikrofüllstoffe, vereinzelt auch nanoskalige Füllstoffe, für Faserverbundformteile nur zur Oberflächenmodifizierung vorgeschlagen worden, wie dies beispielsweise aus der DE 196 47 368 A1 hervorgeht.

Der Erfindung liegt die Aufgabe zugrunde, die Herstellung eines Verbundformteils durch Injektion eines flüssigen, niedrigviskosen Kunststoffes in einen Faserträger zu ermöglichen, durch die das Verbundformteil verbesserte mechanische Eigenschaften erfährt und auch für eine Leichtbauweise geeignet ist.

Zur Lösung dieser Aufgabe ist erfindungsgemäß das Verfahren der eingangs erwähnten Art dadurch gekennzeichnet, dass der flüssige Kunststoff vor der Injektion mit 0,01 bis 40 Gew.% Nanopartikeln mit einer größten Ausdehnung < 100 nm versetzt wird. Dementsprechend enthält das erfindungsgemäße, durch Injektion des Kunststoffes in den Faserträger hergestellte Verbundformteil eine Kunststoffmatrix mit 0,01 bis 40 Gew.% Nanopartikel mit einer größten Ausdehnung < 100 nm.

Der Erfindung liegt die Erkenntnis zugrunde, dass durch die Zugabe von Nanopartikeln zu dem flüssigen Kunststoff die von Mikrofüllstoffen bekannten Eigenschaftsänderungen nicht auftreten. Es findet weder eine merkliche Erhöhung der Viskosität des flüssigen Kunststoffs statt noch erhöht sich die Dichte des hergestellten Verbundformteils wesentlich, da deutlich geringere Gewichtsanteile der Nanopartikel bezogen auf die Kunststoffmatrix benötigt werden, um die gewünschten Eigenschaftsverbesserungen des hergestellten Verbundformteils zu erreichen. Die erreichten verbesserten Eigenschaften beziehen sich insbesondere auf die Festigkeit, Steifigkeit, Schlagzähigkeit, Querkontraktion, Schrumpf und Wärmeformbeständigkeit des Verbundformteils. Vergleichbare Verbesserungen werden mit Mikrofüllstoffen nur dann erreicht, wenn der Füllstoffgehalt deutlich über 50 Gew.% bezogen auf die Kunststoffmatrix beträgt.

Bevorzugt werden erfindungsgemäß Nanopartikel mit einer größten Ausdehnung < 50 nm verwendet.

Bevorzugte Kunststoffmatrizen sind die oben erwähnten duroplastischen Kunststoffe.

Als erfindungsgemäß verwendbare Nanomaterialien werden vorzugsweise siliziumbasierte Nanopartikel (Organoclays) eingesetzt. Daneben kommen auch kohlenstoffbasierte Nanotubes/Nanofibers und siliciumbasierte Käfigstrukturen (POSS-Silikate: Polyoctahedral Oligomeric Silesquioxane) sowie Dendrimere und hyperverzweigte Polymere in Frage.

Der geeignete Anteil der Nanopartikel an der Kunststoffmatrix ist abhängig von der Art der Nanopartikel. Die niedrige Anteilsgrenze von 0,01 Gew.% ergibt sich für Kohlenstoff-Nanotubes und Diamant-Nanopartikel, während für andere Nanopartikel, wie Schichtsilikate, die erfindungsgemäßen Effekte erst bei einer Zugabe von etwa 10 Gew.% einsetzen. Überraschenderweise führen für bestimmte Nanopartikel bereits die angegebenen geringen Anteile zu einer angestrebten Eigenschaftsverbesserung.

Die Verwendung derartiger nicht-elastomerer Nanofüllstoffe zur Modifizierung von Kautschuk, Kleb- und Dichtstoffen, Lacken und Schmelzen ist bekannt, um eine bessere Verarbeitbarkeit und ggf. Scherverdünnungen zu bewirken. Für PET dienen Nanofüllstoffe zur Herstellung von PET-Flaschen. Dabei wird die Zugabe der Nanopartikel als eine Möglichkeit der Modifizierung der Kunststoffmatrix angesehen. Die Verwendung der Nanofüllstoffe für Faserverbundformteile, die durch das Injektionsverfahren herstellbar, ist bisher nicht in Betracht gezogen worden.

Die erfindungsgemäße Modifzierung einer Kunststoffmatrix sowohl durch den Faserträger als auch durch die Füllung der Kunststoffmatrix mit Nanopartikeln und die erfindungsgemäße Herstellbarkeit eines derartigen Verbundformteils im Injektionsverfahren führt zu Verbundformteilen, die völlig neuartige Eigenschaftsklassen erschließen, da gegenüber herkömmlichen Faserverbundformteilen deutliche Verbesserungen hinsichtlich der genannten mechanischen und thermischen Eigenschaften erzielbar werden.

### Beispiel 1

Zur Herstellung der polymeren Matrix werden 40 Gew.% Nanomaterial (Organoclay) in ein Epoxid-Harz auf Bisphenol-A-Basis eingetragen und anschließend mit einem Härter vermischt. Das nanogefüllte Polymersystem lässt sich problemlos im Injektionsverfahren verwenden. Als Faserhalbzeug wurde ein Glasfasergewebe verwendet. Das im Injektionsverfahren hergestellte Verbundformteile zeigte signifikante Verbesserungen in den mechanischen Kennwerten Festigkeit, Steifigkeit, Schlagzähigkeit, Querkontraktion, Schrumpf und Wärmeformbeständigkeit.

### Beispiel 2

Ein duroplastisches Drei-Komponenten-Harz wurde mit 25 Gew.% des Nanomaterials gemäß Beispiel 1 gefüllt und zur Herstellung eines Verbundformteils gemäß Beispiel 1 verwendet. Das hergestellte Verbundformteil weist im Vergleich zu nicht gefüllten, im Übrigen in gleicher Weise hergestellten Verbundformteilen eine Steigerung des E-Moduls und des G-Moduls auf mehr als 130 % im linearen Bereich auf, während die Steigerung der genannten Module für eine Bruchlast bis zu 50 % auf 154 % bzw. 161 % zu beobachten war.

## Patentansprüche

1. Verfahren zur Herstellung eines Verbundformteils durch Injektion eines flüssigen, niedrigviskosen Kunststoffs in einen Faserträger, der in eine Kavität einer evakuierbaren Form eingelegt ist, und durch anschließendes Erhärten des injizierten Kunststoffs in der Form, **dadurch gekennzeichnet, dass** der flüssige Kunststoff vor der Injektion mit 0,01 bis 40 Gew.% Nanopartikeln mit einer größten Ausdehnung < 100 nm versetzt wird.

2. Verfahren zur Herstellung eines Verbundformteils nach Anspruch 1, **dadurch gekennzeichnet, dass** nicht-elastomere Nanopartikel verwendet werden.

3. Verfahren nach Anspruch 1 oder 2, **dadurch gekennzeichnet, dass** die Nanopartikel aus der Gruppe siliziumbasierter Nanopartikel, kohlenstoffbasierter Nanotubes oder Nanofibres, siliziumbasierter Käfigstrukturen, Dendrimere oder Diamant-Nanopartikel ausgewählt werden.

4. Verfahren nach einem der Ansprüche 1 bis 3, **dadurch gekennzeichnet, dass** die Nanopartikel mit einer größten Ausdehnung < 50 nm verwendet werden.

5. Verfahren nach einem der Ansprüche 1 bis 4, **dadurch gekennzeichnet, dass** ein duroplastischer Kunststoff verwendet wird.

6. Verfahren nach einem der Ansprüche 1 bis 5, **dadurch gekennzeichnet, dass** der Anteil der Nanopartikel in dem flüssigen Kunststoff 10 bis 25 Gew.%, vorzugsweise 10 bis 15 Gew.% beträgt.

7. Verbundformteil mit einem Faserträger und einer Kunststoffmatrix, die in den Faserträger in flüssiger Form injiziert worden ist, **dadurch gekennzeichnet, dass** die Kunststoffmatrix 0,01 bis 40 Gew.% Nanopartikel mit einer größten Ausdehnung < 100 nm enthält.

8. Verbundformteil nach Anspruch 6, **dadurch gekennzeichnet, dass** die Nanopartikel nicht-elastomere Nanopartikel sind.

9. Verbundformteil nach Anspruch 7 oder 8, **dadurch gekennzeichnet, dass** die Nanopartikel aus der Gruppe siliziumbasierter Nanopartikel, kohlenstoffbasierter Nanotubes oder Nanofibres, siliziumbasierter Käfigstrukturen, Dendrimere oder Diamant-Nanopartikel ausgewählt sind.

10. Verbundformteil nach einem der Ansprüche 7 bis 9, **dadurch gekennzeichnet, dass** die die Nanopartikel eine größte Ausdehnung < 50 nm aufweisen.

11. Verbundformteil nach einem der Ansprüche 7 bis 10, **dadurch gekennzeichnet, dass** die Kunststoffmatrix duroplastisch ist.

12. Verbundformteil nach einem der Ansprüche 7 bis 11, **dadurch gekennzeichnet, dass** der Anteil der Nanopartikel in der Kunststoffmatrix 10 bis 25 Gew.%, vorzugsweise 10 bis 15 Gew.%, beträgt.

## Claims

1. Process for production of a composite moulding via injection of a low-viscosity liquid plastic into a fibre support which has been inserted into a cavity of an evacuatable mould, and via subsequent hardening of the injected plastic in the mould, **characterized in that** the liquid plastic is admixed, prior to the injection process, with from 0.01 to 40% by weight of nanoparticles whose largest dimension is < 100 nm.

2. Process for production of a composite moulding according to Claim 1, **characterized in that** non-elastomeric nanoparticles are used.

3. Process according to Claim 1 or 2, **characterized in that** the nanoparticles are selected from the group of silicon-based nanoparticles, carbon-based nanotubes or nanofibres, silicon-based cage structures, dendrimers or diamond nanoparticles.

4. Process according to any of Claims 1 to 3, **characterized in that** the largest dimension of the nanoparticles used is < 50 nm.

5. Process according to any of Claims 1 to 4, **characterized in that** a thermoset plastic is used.

6. Process according to any of Claims 1 to 5, **characterized in that** the proportion of the nanoparticles in the liquid plastic is from 10 to 25% by weight, preferably from 10 to 15% by weight.

7. Composite moulding with a fibre support and with a plastics matrix which has been injected in liquid form into the fibre support, **characterized in that** the plastics matrix comprises from 0.01 to 40% by weight of nanoparticles whose largest dimension is < 100 nm.

8. Composite moulding according to Claim 6, **characterized in that** the nanoparticles are non-elastomeric nanoparticles.

9. Composite moulding according to Claim 7 or 8, **characterized in that** the nanoparticles are selected from the group of silicon-based nanoparticles, carbon-based nanotubes or nanofibres, silicon-based cage structures, dendrimers or diamond nanoparticles.

10. Composite moulding according to any of Claims 7 to 9, **characterized in that** the largest dimension of the nanoparticles is < 50 nm.

11. Composite moulding according to any of Claims 7 to 10, **characterized in that** the plastics matrix is a thermoset material.

12. Composite moulding according to any of Claims 7 to 11, **characterized in that** the proportion of the nanoparticles in the plastics matrix is from 10 to 25% by weight, preferably from 10 to 15% by weight.

## Revendications

1. Procédé pour fabriquer une pièce moulée composite par injection d'une matière synthétique liquide, de faible viscosité, dans un support de fibres qui est placé dans une cavité de moule pouvant être mise sous vide, et par durcissement subséquent de la matière synthétique injectée, **caractérisé en ce qu'**avant l'injection la matière synthétique liquide est additionnée de nanoparticules ayant une dimension maximale inférieure à 100 nm.

2. Procédé pour fabriquer une pièce moulée composite selon la revendication 1, **caractérisé en ce que** des nanoparticules non élastomère sont utilisées.

3. Procédé selon la revendication 1 ou 2, **caractérisé en ce que** les nanoparticules sont choisies dans le groupe des particules à base de silicium, les nanotubes ou nanofibres à base de carbone, les structures en cage à base de silicium, les nanoparticules dendrimère ou diamant.

4. Procédé selon l'une des revendications 1 à 3, **caractérisé en ce que** des nanoparticules ayant une dimension maximale inférieure à 50 nm sont utilisées.

5. Procédé selon l'une des revendications 1 à 4, **caractérisé en ce qu'**une matière plastique thermodurcissable est utilisée.

6. Procédé selon l'une des revendications 1 à 5, **caractérisé en ce que** la teneur des nanoparticules dans la matière synthétique liquide est de 10 à 25% en poids, de préférence de 10 % à 15 % en poids.

7. Pièce moulée composite comprenant un support de fibres et une matrice de matière synthétique qui a été injectée sous forme liquide dans le support de fibres, **caractérisée en ce que** la matrice de matière synthétique renferme de 0,01 à 40% en poids de nanoparticules ayant une dimension maximale inférieure à 100nm.

8. Pièce moulée composite selon la revendication 7, **caractérisée en ce que** les nanoparticules sont des nanoparticules non élastomère.

9. Pièce moulée composite selon la revendication 7 ou 8, **caractérisée en ce que** les nanoparticules sont choisies dans le groupe des particules à base de silicium, les nanotubes ou nanofibres à base de carbone, les structures en cage à base de silicium, les nanoparticules dendrimère ou diamant.

10. Pièce moulée composite selon l'une des revendications 7 à 9, **caractérisée en ce que** les nanoparticules ont une dimension maximale inférieure à 50 nm.

11. Pièce moulée composite selon l'une des revendications 7 à 10, **caractérisée en ce que** la matrice de matière synthétique est en thermodurcissable.

12. Pièce moulée composite selon l'une des revendications 7 à 11, **caractérisée en ce que** la teneur des nanoparticules dans la matrice en matière synthétique est de 10 à 25% en poids, de préférence de 10 à 15% en poids.
